Europäisches Patentamt

European Patent Office

Office européen des brevets

(11) Publication number: **0 181 738**
**B1**

## EUROPEAN PATENT SPECIFICATION

(45) Date of publication of patent specification: **18.01.89**

(21) Application number: **85307852.5**

(22) Date of filing: **30.10.85**

(51) Int. Cl.⁴: **G 05 D 7/00,** G 01 G 11/08, G 01 G 13/24

(54) Flow control apparatus.

(30) Priority: **08.11.84 GB 8428275**

(43) Date of publication of application:
**21.05.86 Bulletin 86/21**

(45) Publication of the grant of the patent:
**18.01.89 Bulletin 89/03**

(84) Designated Contracting States:
**AT BE CH DE FR GB IT LI LU NL SE**

(56) References cited:
**DE-A-2 304 792**
**DE-A-2 631 232**
**DE-A-3 100 577**

(73) Proprietor: **DOBSON PARK INDUSTRIES PLC**
**Dobson Park House Colwick Industrial Estate**
**Nottingham NG1 2BX (GB)**

(72) Inventor: **Ford, Derek William**
**21 Ennerdale Road**
**Sherwood Nottingham NG5 3GP (GB)**

(74) Representative: **Neill, Alastair William et al**
**Appleyard Lees & Co. 15 Clare Road**
**Halifax West Yorkshire HX1 2HY (GB)**

EP 0 181 738 B1

# Description

The invention relates to flow control apparatus for example in controlling the flow of granular material to a weighing machine.

When bagging granular material, for example, granular material may be fed from a bulk supply into a weighing apparatus. Once a predetermined weight has accumulated in the weighing apparatus the flow from the bulk supply is cut off and the material in the weighing apparatus is deposited in a bag or other container. It is desirable for the weighing to be as accurate as is practicable, as even small inaccuracies, of, say, 1% would mean the loss of one bag per hundred if overweight, and a possible infringement of weights and measures legalisation if underweight. Tolerances of plus or minus 0.1% are therefore not uncommon. It is also important that the speed of the weighing, for example of up to twenty five discharges per minute, be optimised, and that the speed of weighing should not impair the accuracy and vice versa.

In known automatic weighing machines the flow of material from the bulk supply is controlled by sequentially operated baffles or shutters. There are normally two discharge stages. During the first stage material is allowed to flow uninterrupted from a bulk container through a discharge spout and into a weigh pan. As the required weight is approached, the flow is restricted either by partially closing a valve or gate on the discharge spout or by fully closing an inner valve or gate having a hole therein, so that flow can only take places subsequently through the hole. Once the required weight has actually been attained, an outer valve or gate closes thus completely cutting off the flow of material to the weigh pan from the bulk container.

The partial closing of valve or gate, or the use of an inner valve or gate having a hole, restricts flow not only by reducing the flow aperture but also by introducing a frictional effect between the material being discharged and static material which is captive on the upper surface of the inner valve or gate or partially closed valve or gate.

It is obviously desirable for the weighing to be carried out as quickly as possible, to optimise production, and so ideally the first stage of filling should occupy as much of the cycle as possible. However rapid filling from the bulk container induces vibrations or swaying of the weigh pan which causes inaccuracies and it is therefore necessary to restrict the full flow at an early stage of material transfer to allow the weigh pan to stabilise whilst the weight is topped up to the final required amount during the second, less rapid, stage of transfer.

However the partial closing of a valve or gate, or the complete closing of a valve or gate having an aperture therein, introduces a sudden pronounced barrier to the smooth flow of the material. This, in effect, introduces a shock to the system and hence aggravates the above mentioned problems associated with vibration or swaying of the weigh pan.

DE—A—2 304 792 discloses a device using a sliding side which produces slightly less shock but nevertheless the side, when it moves to restrict flow, does cut across the flow path at a significant angle, and some shock does still result.

With a view to avoiding or reducing these problems the invention provides flow control apparatus comprising body means defining a through passage for granular material, and control means for controlling the rate of flow, the control means comprising at least one side of the through passage movable to narrow an outlet end of the through passage characterised in that the movable side of the through passage is pivotable to alter the angle of the side and hence narrow the outlet end while maintaining a smooth flow path through the passage.

The or each side may be movable by a fluid operated ram, preferably a pneumatically operated ram.

Stop means may be provided to limit the movement of the or each movable side.

Closure means may be provided, operable to close fully the outlet end.

Preferably the closure means is operable to close fully the outlet end regardless of the position of the or each movable side.

The closure means may comprise a gate which is movable across the flow path, for example by a fluid operated ram, preferably a pneumatically operated ram.

The flow control apparatus may be associated with a weigh pan and weighing apparatus, the weigh pan having its own closure means for delivery of weighed material from the weigh pan, the closure means of the weigh pan being interconnected by electrical means with the closure means of the flow control apparatus so that they operate sequentially and cannot open together.

The weighing apparatus is preferably as described in our co-pending European Patent application of even date (EP—A2—181147) claiming priority from U.K. Patent Application No. 8428274.

By way of example, a specific embodiment of flow control apparatus according to the invention will now be described, with reference to the accompanying drawings, in which:—

Figure 1 is a side view of an embodiment of flow control apparatus according to the invention; associated with a weighing machine;

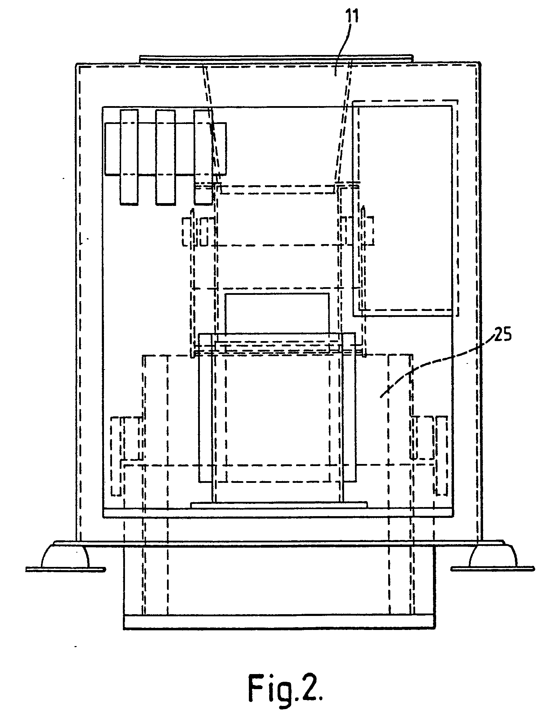

Figure 2 is an end view of the flow control apparatus to a different scale;

Figure 3 is a plan view of the flow control apparatus;

Figure 4 is a side view of part of the weighing machine, showing a weight sensing device in more detail; and

Figure 5 is an end view of that part of the weighing machine shown in Figure 4.

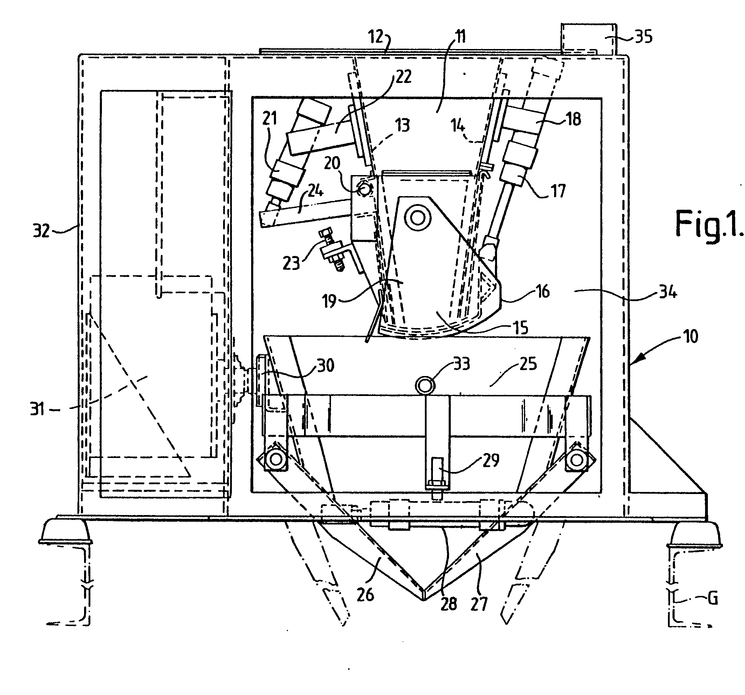

In Figure 1, item G represents a gantry which is surmounted by a weighing machine 10 for the automatic weighing of granular material such as fertilizer.

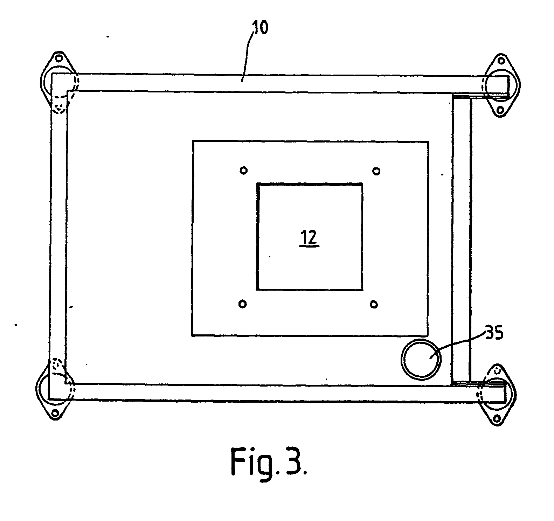

The machine 10 is provided with flow control apparatus in the form of a bulk feed hopper 11 having an opening 12 (best seen in Figure 3) which opening is connected to a bulk feed storage container (not shown).

The hopper 11 has sloping sides 13 and 14 leading to a discharge outlet 15. A swinging gate 16 operated by a ram 17 mounted on the side 14 and 18 is so arranged that the flow through the discharge outlet 15 can be completely stopped when the gate is in the position shown in Figure 1.

The hopper has a movable side 19 pivotally mounted at 20. Fixed to the side 19 is a lever 24 and by extending a ram 21 which is attached to the lever 24, the side 19 can be pivoted anticlockwise about the pivot 20 as viewed in Figure 1. The ram 21 is mounted on the hopper at 22. An adjusting screw 23 is secured to a fixed part of the hopper to limit the downward pivoting movement of the lever 24 and hence govern the extent to which the side 19 may be moved to narrow the discharge inlet 15 and restrict material flow from the hopper 11.

Located below the hopper 11 is a weigh pan 25 having closure doors 26 and 27 operable by a ram 28. The position of the ram 28 is sensed by a proximpty switch 29 which makes it possible to monitor whether the doors 26 and 27 are open or closed.

The weight pan 25 is releasably supported on a load sensing mechanism 31 by means of a claw 30 which engages over a buttonhead shaft 36.

The load sensing mechanism 31 is housed in a cabinet 32.

The weigh pan may be removed from the buttonhead shaft by lifting the claw attachment and weigh pan. Tubes 33 are provided at each side of the weigh pan for this purpose.

The hopper and weigh pan are enclosed in a cabinet 34 which is vented to atmosphere or to the bulk storage container at 35.

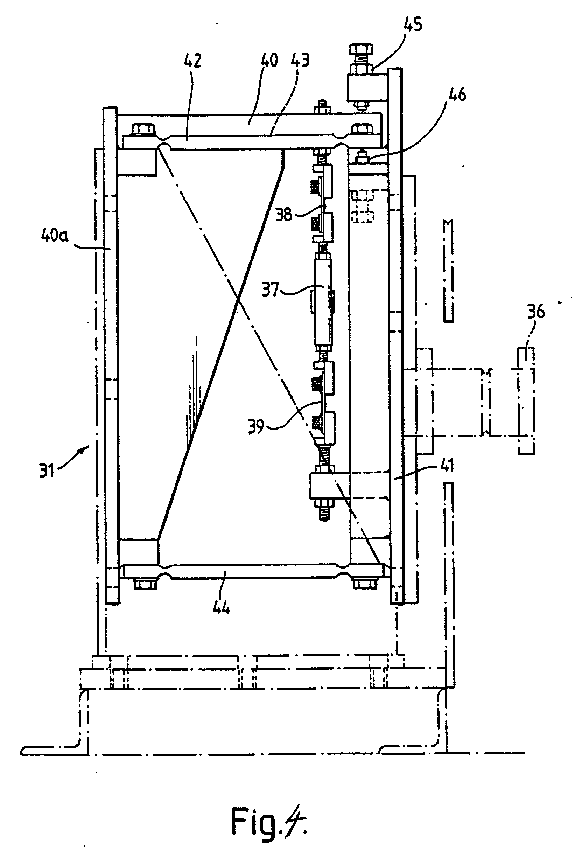

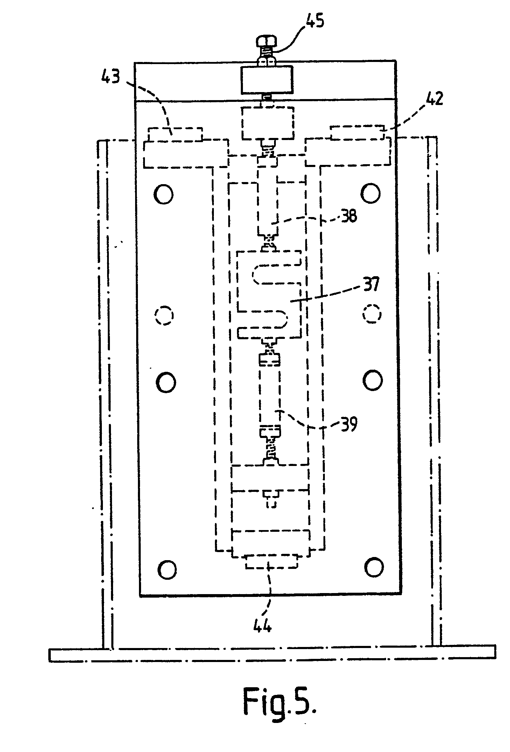

The load sensing mechanism 31 is as described in our above mentioned co-pending Patent Application of even date and will not therefore be described in detail. Briefly however, with reference to Figures 4 and 5, the mechanism comprises a load cell 37 connected by flexible strips 38 and 39 to a rigid support arm 40 at its upper end and to a movable mounting plate 41 at its lower end. The arm 40 projects from a fixed vertical plate 40a and the plates 41 and 40a are interconnected but in spaced apart fashion by flexure members 42, 43 and 44. These flexure members permit the plate 41 to move parallel to the plate 40a. The shaft 36 is rigidly attached to the plate 41 and the movement of the plate 41 is limited in the downward direction by a screw 45 and in the upward direction by a screw 46. The application of a load to the shaft 36 tends to move the plate 41 downwardly, thus putting a load on the load cell 37.

In operation material to be weighed is located in the bulk storage container above the hopper 11. Initially the closure doors of the weigh pan, 26 and 27, are held in the closed position by the ram 28 which closure is confirmed by a signal from the proximity switch 29. At the start of the weighing sequence the swinging gate 16 is closed and the pivotable side 19 is aligned with side 13 as shown in Figure 1, ensuring that the discharge outlet 15 is set at its widest opening. Thus material in the hopper 11 is resting on the upper surface of the gate 16 which will ensure a full flow of material upon opening of the gate 16.

To commence weighing the ram 17 is retracted to open the gate 16 and material is allowed to flow from the hopper 11 into the weigh pan 25. Upon attaining a predetermined weight in the weigh pan which is less than the required full load, the ram 21 is extended to pivot the lever 24 and hence move the side 19 until the lever 24 engages with the screw 23. Thus the discharge outlet 15 is substantially reduced allowing a highly controlled smooth, streamlined flow of material into the weigh pan until the weight is topped up to the final desired amount. At this point a signal from the load cell causes the ram 17 to extend, moving the gate 16 back into the position shown in Figure 1 and completely stopping the flow of material into the weigh pan. The doors 26 and 27 are then opened and the material of known weight is discharged into a bag or like container.

It can be seen that because the transition from high to low flow rate is extremely smooth and controlled, shocks to the system are avoided. It is therefore possible to employ higher feed rates and obtain better feeding accuracy than could be obtained with feeding devices used previously. Vibrations induced into the weighing system are minimised allow extremely high weighing speeds to be achieved.

The invention is not restricted to the details of the foregoing embodiment. For instance the side 14 may also be movable if desired.

**Claims**

1. Flow control apparatus comprising body means (11) defining a through passage (12, 15) for granular material, and control means for controlling the rate of flow, the control means comprising at least one side of the through passage movable to narrow an outlet end of the through passage characterised in that the movable side (19) of the through passage is pivotable to alter the angle of the side and hence narrow the outlet end while maintaining a smooth flow through the passage.

2. Flow control apparatus as claimed in Claim 1, in which the or each side (14, 19) is movable by a fluid operated ram (21).

3. Flow control apparatus as claimed in Claim 2, in which the ram (21) is pneumatically operated.

4. Flow control apparatus as claimed in any one of Claims 1 to 3, in which stop means (23) are provided to limit the movement of the or each movable side.

5. Flow control apparatus as claimed in any one of the preceding claims, in which closure means (16) are provided, operable to close fully the outlet end.

6. Flow control apparatus as claimed in Claim 5, in which the closure means is operable to close fully the outlet end regardless of the position of the or each movable side.

7. Flow control apparatus as claimed in Claim 5 or Claim 6, in which the closure means comprises a gate (16) which is movable across the flow path.

8. Flow control apparatus as claimed in Claim 7, in which the gate is movable by a fluid operated ram (17).

9. Flow control apparatus as claimed in Claim 8, in which the ram (17) is pneumatically operated.

10. Flow control apparatus as claimed in any one of the preceding claims, in which the body means comprises a discharge hopper (11).

11. Flow control apparatus as claimed in any one of the preceding claims, associated with a weigh pan (25) and weighing apparatus (31), the weigh pan having its own closure means (26, 27) for delivery of weighed material from the weigh pan, the closure means of the weigh pan being interconnected by electrical means with the closure means of the flow control apparatus so that they operate sequentially and cannot open together.

## Patentansprüche

1. Durchsatzregelgerät mit einem Gehäuse (11), das eine Durchgangsöffnung (12, 15) für kornförmiges Gut bildet, sowie eine den Durchsatz regelnde Regeleinrichtung, die wenigstens eine Wand der Durchgangsöffnung aufweist, die beweglich ist, um das Auslaßende der Durchgangsöffnung zu verengen, dadurch gekennzeichnet, daß die bewegliche Wand (19) der Durchgangsöffnung schwenkbar ist, um den Winkel der Wand zu verändern und damit das Auslaßende zu verengen, während eine ruhige Strömung durch die Öffnung erhalten bleibt.

2. Durchsatzregelgerät nach Anspruch 1, dadurch gekennzeichnet, daß die oder jede Wand (14, 19) durch einen Stempel (21) bewegbar ist, der von einem fließfähigen Medium betätigt ist.

3. Durchsatzregelgerät nach Anspruch 2, dadurch gekennzeichnet, daß der Stempel (21) pneumatisch betätigt ist.

4. Durchsatzregelgerät nach einem der Ansprüche 1 bis 3, dadurch gekennzeichnet, daß ein Anschlag zum Begrenzen des Hubes der einzelnen beweglichen Wand vorgesehen ist.

5. Durchsatzregelgerät nach einem der vorausgegangenen Ansprüche, dadurch gekennzeichnet, daß eine Sperre (16) zum vollständigen Absperren des Auslaßendes vorgesehen ist.

6. Durchsatzregelgerät nach Anspruch 5, dadurch gekennzeichnet, daß die Sperre derart betätigbar ist, daß sie das Auslaßende ungeachtet der Position der einzelnen Wand vollständig abzusperren vermag.

7. Durchsatzregelgerät nach Anspruch 5 oder 6, dadurch gekennzeichnet, daß die Sperre ein Gatter (16) aufweist, das quer zum Strömungswege bewegbar ist.

8. Durchsatzregelgerät nach Anspruch 7, dadurch gekennzeichnet, daß das Gatter mittels eines durch ein fließfähiges Medium betätigbaren Stempels (17) beweglich ist.

9. Durchsatzregelgerät nach Anspruch 8, dadurch gekennzeichnet, daß der Stempel (17) pneumatisch betätigt ist.

10. Durchsatzregelgerät nach einem der vorausgegangenen Ansprüche, dadurch gekennzeichnet, daß das Gehäuse eine Entladeschurre (11) aufweist.

11. Durchsatzregelgerät nach einem der vorausgegangenen Ansprüche, dadurch gekennzeichnet, daß eine Waagschale (25) und eine Wiegevorrichtung (31) zugeordnet sind, daß die Waagschale ihre eigene Sperre (26, 27) zum Zuführen von abgewogenem Gut von der Waagschale aufweist, und daß die Sperre der Waagschale elektrisch mit der Sperre des Durchsatzregelgerätes verbunden ist, so daß diese aufeinander folgend arbeiten und nicht gemeinsam öffnen können.

## Revendications

1. Dispositif de commande de débit comprenant des moyens formant corps (11) définissant un passage traversant (12, 15) pour un matériau granulaire, et des moyens de commande servant à régler le débit, les moyens de commande comprenant au moins un côté du passage traversant déplaçable de manière à rétrécir une extrémité de sortie de ce passage traversant, caractérisé en ce que le côté mobile (19) du passage traversant peut pivoter, ce qui modifie l'angle de ce côté et par conséquent rétrécit, l'extrémité de sortie tout en maintenant un écoulement uniforme dans le passage.

2. Dispositif de commande de débit selon la revendication 1, dans lequel le ou chaque côté (14, 19) est déplaçable par un piston (21) actionné par un fluide.

3. Dispositif de commande de débit selon la revendication 2, dans lequel le piston (21) est actionné pneumatiquement.

4. Dispositif de commande de débit selon l'une quelconque des revendications 1 à 3, dans lequel des moyens de butée (23) sont prévus pour limiter le déplacement du ou de chaque côté mobile.

5. Dispositif de commande de débit selon l'une quelconque des revendications précédentes, dans lequel il est prévu des moyens de fermeture (16) pouvant agir de manière à fermer complètement l'extrémité de sortie.

6. Dispositif de commande de débit selon la revendication 5, dans lequel les moyens de fermeture peuvent agir de manière à fermer complètement l'extrémité de sortie indépendamment de la position du ou de chaque côté mobile.

7. Dispositif de commande de débit selon la revendication 5 ou 6, dans lequel les moyens de fermeture comprennent une porte (16) qui est déplaçable en travers du trajet de l'écoulement.

8. Dispositif de commande de débit selon la revendication 7, dans lequel la porte est déplaça-

4

ble au moyen d'un piston (17) actionné par un fluide.

9. Dispositif de commande de débit selon la revendication 8, dans lequel le piston (17) est actionné pneumatiquement.

10. Dispositif de commande de débit selon l'une quelconque des revendications précédentes, dans lequel les moyens formant corps constituent une trémie de décharge (11).

11. Dispositif de commande de débit selon l'une quelconque des revendications précédentes, associé à une cuvette de pesée (25) et à un dispositif de pesée (31), la cuvette de pesée comprenant ses propres moyens de fermeture (26, 27) permettant la délivrance du matériau pesé à partir de la cuvette de pesée, les moyens de fermeture de la cuvette de pesée étant interconnectés par des moyens électriques aux moyens de fermeture du dispositif de commande de débit de sorte qu'ils fonctionnent de façon séquentielle et ne peuvent pas s'ouvrir simultanément.

Fig.1.

EP 0 181 738 B1

Fig.2.

Fig. 3.

Fig.4.

Fig.5.